# EUROPEAN PATENT SPECIFICATION

(11) **EP 0 559 410 B1**
(45) Date of publication and mention of the grant of the patent: **21.08.1996**
(21) Application number: 93301523.2
(22) Date of filing: 01.03.1993
(51) Int. Cl.: B60K 15/03

(54) **Stabilising a plastics fuel tank**
Verstärkung für einen Kraftstofftank aus Kunststoff
Renforcement pour un réservoir d'essence en matière plastique

(30) Priority: 03.03.1992 GB 9204624
(43) Date of publication of application: 08.09.1993
(73) Proprietor: FORD MOTOR COMPANY LIMITED, Brentwood Essex (GB); FORD FRANCE S. A., F-92506 Rueil-Malmaison Cédex (FR); FORD-WERKE AKTIENGESELLSCHAFT, D-50725 Köln (DE); KAUTEX WERKE REINOLD HAGEN AG, D-53229 Bonn (DE)
(72) Inventor: Pardy, Ronald Peter, Tiptree, Essex CO5 0PN (GB); Woodgate, Michael John, Horndon-on-the-Hill, Essex SS17 8LZ (GB); Vogeley, Detlev, W-5330 Konigswinter 21 (DE); Linden, Gunter, W-5300 Bonn 3 (DE)
(74) Representative: Messulam, Alec Moses

(56) References cited:
- EP-A- 0 086 425
- DE-A- 3 213 070
- FR-A- 2 201 676

## Description

This invention relates to a method for stabilising a plastics fuel tank for a motor vehicle, and to a stabilised fuel tank. The invention is particularly applicable to a motor vehicle fuel tank made as a blow moulded plastics article.

It is known to make motor vehicle fuel tanks by blow moulding. This has the advantage that complex shapes can more easily be made than with conventional pressed steel tanks. Because more complicated shapes can be made, it is possible to tailor the tank shape to fit within and around the underbody components on a motor vehicle.

However plastics materials, in particular high density polyethylene which is the preferred material for fuel tanks, have less rigidity in sheet form than metal. In order to increase the stiffness of the walls of a plastics fuel tank, and thus to stabilise the tank shape, it is known to interconnect particularly the top and bottom walls of the tank at one or more places within the tank volume.

The present invention is concerned with a way of achieving such a connection.

It is known, for example from FR-A-2 523 076, to arrange opposite tank walls so that they approach one another and then to weld the two walls together at the point where they make contact. Such an arrangement relies on the strength of the weld to connect the opposed walls, and thus the weld must resist both tension and shear forces acting across the weld. It is difficult to make a weld of this nature which will be sufficiently strong to withstand both the forces imposed on the tank walls during use, and which will satisfy the "drop" test which such tanks are required to pass.

It is also known from FR-PS 2 201 676 to make a tank with opposite walls welded together at a central position, and with radially oriented moulded undulations around the weld location.

According to the present invention, there is provided a blow moulded plastics fuel tank having walls defining a fuel-containing cavity, wherein two opposite walls of the tank are welded together at a position away from the edge of the tank characterised in that wherein the wall regions surrounding the weld position have a convoluted form which includes an annular rib in each opposite wall, surrounding the weld position, and annular grooves surrounding the annular ribs.

By incorporating a convoluted form with an annular rib and an annular groove around the weld, any shock loadings on the tank walls will be absorbed to a considerable extent by flexing of the convolutions, so that there will be a considerable reduction in the shock loading which will be experienced by the weld itself. Since the weld experiences less shock loading, it is less likely to fail.

In order to further isolate the weld position from shock loading, the convoluted wall regions may be secured to one another, either by welding the wall regions together or by the fitting of a clamping device. Such a clamping device may comprise two clamp plates together with means (for example a threaded bolt and nut) for drawing the plates together from opposite sides of the tank.

In one embodiment, the two opposite tank walls are welded together by an annular weld, and a hole can then be made through the tank walls inside the perimeter of the annular weld. The clamping device can then act through the hole.

The clamp plates may be shaped to conform to the convoluted form of the tank wall regions and can conveniently exert a clamping force on the bases of the annular grooves.

The weld between the opposite tank walls may be formed either by bringing the walls together so that they lie parallel to each other with facing surfaces in contact, and then welding them together in this position. Alternately however the weld may be an edge-to-edge, or butt-weld which can be formed on an annular contact line, during the moulding process.

The invention will now be further described, by way of example, with reference to the accompanying drawings, in which:
Figure 1 is a side elevation, partly in section, of a "saddle" fuel tank;
Figure 2 is an underneath view of the tank of Figure 1, taken in the direction of the arrow A;
Figure 3 is a cross-section through part of a tank forming a second embodiment of the invention;
Figure 4 is a cross-section through part of a tank forming a third embodiment of the invention;
Figure 5 is a detail view of the part of the tank shown in section in Figure 1;
Figure 6 shows a clamping member in an exploded condition in relation to the tank;
Figure 7 shows the same detail of the tank, in an assembled condition and on a larger scale;
Figures 8, 9 and 10 show three sequential stages during the formation of the weld shown in Figure 3; and
Figure 11 shows a cross-section through part of a tank forming a fourth embodiment of the invention.

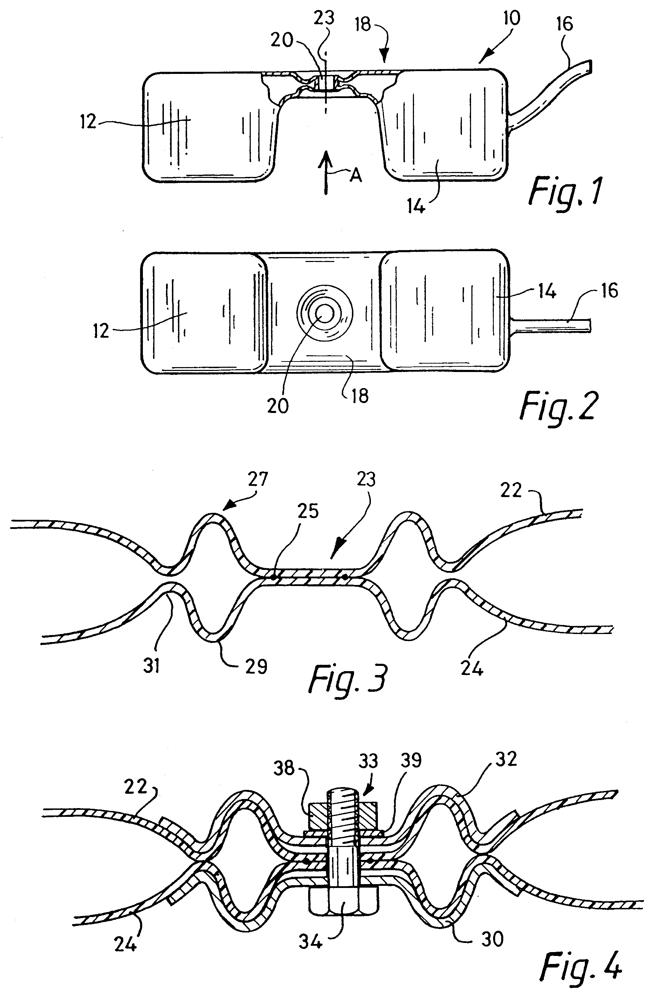

A fuel tank 10 shown in Figure 1 has two tank volumes 12 and 14, and a filler neck 16. The two tank volumes 12 and 14 are connected by a bridge portion generally designated 18. The tank may be constructed in this way so as to allow a transmission shaft to pass along the underside of a vehicle, with part of the tank being arranged on one side of the shaft and the other part being arranged on the other side.

It will be appreciated that the upper surface of the tank, as drawn, represents a relatively large flat surface which could be subject to considerable deformation under the internal tank pressures, unless some steps were taken to stabilise this movement.

In this invention, the stabilisation is effected by connecting the top surface of the tank to the bottom surface of the tank at a position 23 in the region of the bridge portion 18. Such a connection must not interrupt the integrity of the tank, and must be sufficiently robust to ensure that the tank with its two surfaces connected together will still pass the strength and integrity tests to which such tanks have to be subjected. In Figures 1 and 2, the connection forms a sealed passage 20 through the tank.

Figure 3 shows a simple way in which this can be done. A top wall 22 and a bottom wall 24 are connected at a position 23 by a weld 25. The weld may be in the form of a series of spot welds or may be a continuous annular weld. The weld connects the two walls 22, 24 with the walls in a parallel position with their facing surfaces in contact. In order to provide isolation of the weld 25 from movement of the walls 22, 24, the weld 25 is surrounded by a convoluted wall region indicated generally at 27. The convoluted wall region comprises an annular rib 29 surrounding the weld 25 and an annular groove 31 surrounding the rib 29. Now if the wall 22 moves relative to the wall 24 either in its own plane, or in a plane perpendicular to itself (or in a combination of these movements), then the convoluted wall regions will flex to absorb some of this movement, and to prevent the movement from pulling apart the weld 25.

In Figure 3 it will be seen that the grooves 31 on the walls 22 and 24 do not come into contact with one another; when there are imposed loads, the walls with their grooves will move independently of one another. However in an alternative embodiment shown in Figure 4, a clamping device generally designated 33 is added to the features already shown in Figure 3. The clamping device 33 consists of two shaped clamp plates 30, 32, a threaded bolt 34 and a nut 38. A washer 39 is fitted between the nut 38 and the upper clamp plate 32.

The outer regions of the clamp plates 30, 32 conform to the shape of the ribs 29 and grooves 31, and when the nut 38 is tightened the clamp plates force the bases of the grooves 31 into contact with one another on opposite sides of the tank. This provides still further isolation of the weld 25 from any imposed shock loading.

It is important to note in this embodiment that the bolt 34 has to pass through holes in the top and bottom walls 21, 23. In order to maintain the fuel tightness of the tank, it is then necessary for the weld 25 to be a continuous annular weld surrounding the position of the bolt 34.

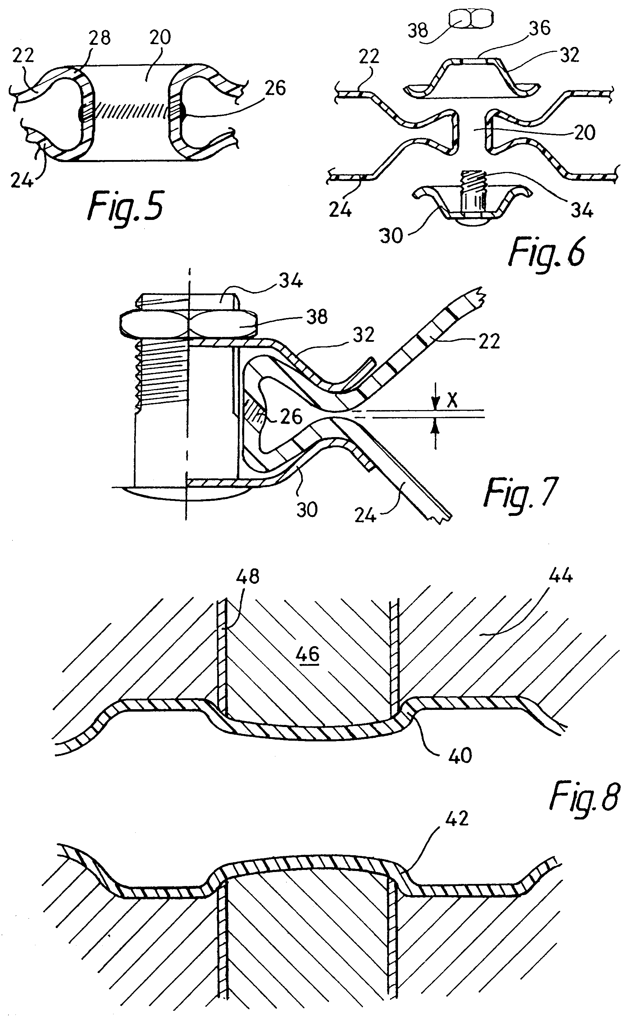

An alternative, and preferred, manner of a accomplishing this joint is shown in Figures 5, 6 and 7. In the embodiments shown in these Figures, the top and bottom tank walls 22, 24 are connected by a butt-welded joint 26. The production of a weld of this type results in the formation of a sealed passage 20 extending between the top and bottom walls, and this passage can receive the bolt 34 of the clamp mechanism previously described.

Figures 8, 9 and 10 show how this weld configuration can be achieved.

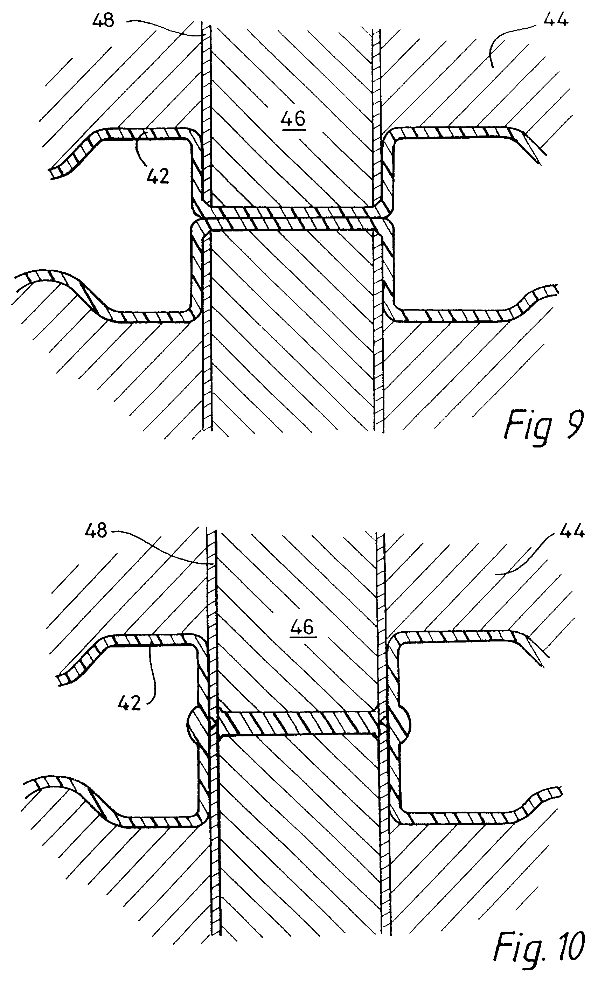

Figure 8 shows a mould wall generally designated 40 against which a parison 42 has been blow moulded. The mould wall has a stationary surface region 44, and two concentric moveable wall portions 46 and 48. Once the initial blowing step has been completed, and whilst the parison 42 is still soft, the moveable mould parts 46 and 48 approach one another to force the opposite parison walls into contact with one another, as can be seen in Figure 9. Further pressure by the moveable tool parts 46 causes the plastics material to meld to form a homogenous body.

Once this stage has been reached, then the outer moveable mould parts 48 advance relative to the inner part 46, to separate a disc 50 from the tank walls 22, 24. Now, when the tank is removed from the mould, the configuration shown in Figure 5 is achieved.

A tank in which the opposite walls 22, 24 are joined in this way and are surrounded by convolutions 27 may inherently possess sufficient strength at the weld 26 to be used without further reinforcement. This arises from the formation of the convolutions 29, 31 adjacent the mould, these convolutions being produced as a result of the shape of the mould 44. However if further strength is required, then a clamping device 33 is applied, as shown in Figures 6 and 7.

The assembled joint is shown in Figure 7. As the nut 38 is tightened, the gap X will gradually be closed, and tightening of the nut 38 will continue until there is full contact between the top and bottom walls 22, 24, where these walls are located between the outer rims of the clamping members 30, 32. In this condition, any relative movement of the walls 22 and 24 will substantially stop at the point of clamping, and at most only a limited amount of movement will be transmitted through to the weld area 26. As a result, the weld area 26 should not come under excessive loading.

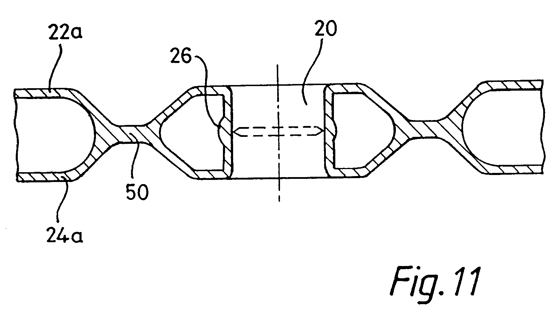

Figure 11 shows an alternative embodiment where, in place of the clamping device 33, the opposite walls 22a, 24a of the tank are welded together at 50.

Although the tank shown in the drawings has only a single stabilising formation at the position 23, more than one such formation may be provided in a particular tank.

## Claims

1. A blow moulded plastics fuel tank (10) having walls defining a fuel-containing cavity (12, 14), wherein two opposite walls (22, 24) of the tank are welded together at a position (23) away from the edge of the tank characterised in that the wall regions (27) surrounding the weld position (23) have a convoluted form which includes an annular rib (29) in each opposite wall, surrounding the weld position, and annular grooves (31) surrounding the annular ribs.

2. A fuel tank as claimed in Claim 1, wherein the convoluted wall regions are welded together by a secondary weld (25) around the weld position.

3. A fuel tank as claimed in Claim 1, wherein a clamping device (33) is fitted at the weld position (23) to clamp together the convoluted wall regions (27) surrounding the weld position.

4. A fuel tank as claimed in Claim 3, wherein the clamping device comprises two clamp plates (30, 32), and means (34, 38) for drawing the plates together from opposite sides of the tank.

5. A fuel tank as claimed in Claim 4, wherein the two opposite tank walls (22, 24) are welded together by an annular weld, and the means for drawing the plates (30, 32) together comprises a threaded stud (34) and a nut (38) which can be screwed onto the stud to draw the plates together, the bolt passing through an aperture through the tank walls which is positioned inside the perimeter of the annular weld.

6. A fuel tank as claimed in Claim 4 or Claim 5, wherein the clamp plates (30, 32) are shaped to conform to the convoluted form of the tank wall regions.

7. A fuel tank as claimed in Claim 6, wherein the clamp plates (30, 32) of the clamping device exert clamping forces at the bases of the annular grooves (31).

8. A fuel tank as claimed in any preceding claim, wherein the opposite walls (22, 24) lie substantially parallel to one another and are welded together with their facing surfaces in contact with each other.

9. A fuel tank as claimed in any one of claims 1 to 6, wherein the opposite walls are welded together on an annular weld line (26), the material enclosed by the annular weld line is removed and the edges of the tank walls are welded together edge to edge to form a butt-weld.

## Patentansprüche

1. Ein mit dem Blasformverfahren hergestellter Kraftstofftank aus Kunststoff (10) mit Wänden, die einen Hohlraum bilden, der Kraftstoff enthält (12, 14), worin zwei einander gegenüberliegende Wände (22, 24) des Tanks an einer vom Rand des Tanks entfernten Stelle (23) zusammengeschweißt sind, dadurch gekennzeichnet, daß die Wandbereiche (27) um die Schweißstelle (23) herum eine gefaltete Form besitzen, die in jeder gegenüberliegenden Wand eine ringförmige Rippe (29) um die Schweißstelle herum aufweist, sowie ringförmige Vertiefungen (31) um die ringförmigen Rippen herum.

2. Ein Kraftstofftank nach Anspruch 1, worin die gefalteten Wandbereiche durch eine sekundäre Schweißnaht (25) um die Schweißstelle herum zusammengeschweißt sind.

3. Ein Kraftstofftank nach Anspruch 1, worin eine Klemmvorrichtung (33) an der Schweißstelle (23) befestigt ist, um die gefalteten Wandbereiche (27), die die Schweißstelle umgeben, aneinanderzuklemmen.

4. Ein Kraftstofftank nach Anspruch 3, worin die Klemmvorrichtung zwei Klemmplatten (30, 32) und eine Vorrichtung (34, 38) zum Zusammenziehen der Platten von den gegenüberliegenden Seiten des Tanks her umfaßt.

5. Ein Kraftstofftank nach Anspruch 4, worin die beiden gegenüberliegenden Tankwände (22, 24) durch eine ringförmige Schweißnaht miteinander verschweißt sind und die Vorrichtung zum Zusammenziehen der Platten (30, 32) einen Gewindebolzen (34) und eine Mutter (38) umfaßt, die auf den Bolzen geschraubt werden kann, um die Platten zusammenzuziehen, wobei der Bolzen durch eine Öffnung in den Tankwänden verläuft, die sich innerhalb des Umfanges der ringförmigen Schweißnaht befindet.

6. Ein Kraftstofftank nach Anspruch 4 oder Anspruch 5, worin die Klemmplatten (30, 32) so geformt sind, daß sie sich an die gefaltete Form der Tankwandbereiche anpassen.

7. Ein Kraftstofftank nach Anspruch 6, worin die Klemmplatten (30, 32) der Klemmvorrichtung Klemmkräfte auf die Böden der ringförmigen Vertiefungen (31) ausüben.

8. Ein Kraftstofftank nach irgendeinem der vorhergehenden Ansprüche, worin die einander gegenüberliegenden Wände (22, 24) im wesentlichen parallel zueinander liegen und so zusammengeschweißt sind, daß sich ihre gegenüberliegenden Flächen berühren.

9. Ein Kraftstofftank nach irgendeinem der Ansprüche 1 bis 6, worin die einander gegenüberliegenden Wände entlang einer ringförmigen Schweißlinie (26) miteinander verschweißt werden, das von der ringförmigen Schweißlinie umschlossene Material entfernt wird und die Kanten der Tankwände durch eine Stirnnaht miteinander verschweißt werden, um eine Stumpfschweißnaht zu bilden.

## Revendications

1. Réservoir de carburant en matière plastique moulé par extrusion-soufflage (10) présentant des parois définissant une cavité contenant du carburant (12, 14), dans lequel deux parois (22, 24) opposées du réservoir sont soudées ensemble en un point (23) éloigné de l'arête du réservoir, caractérisé en ce que les régions des parois (27) entourant le point de soudure (23) ont une forme convolutée ou plissée qui inclut une nervure annulaire (29) dans chaque paroi opposée, entourant le point de soudure, et des rainures annulaires (31) entourant les nervures annulaires.

2. Réservoir de carburant selon la revendication 1, dans lequel les régions de paroi convolutée ou plissée sont soudées ensemble par une soudure secondaire (25) autour du point de soudure.

3. Réservoir de carburant selon la revendication 1, dans lequel le dispositif de serrage (33) est fixé ait niveau du point de soudure (23) de manière à serrer ensemble les régions de paroi convolutée ou plissée (27) entourant le point de soudure.

4. Réservoir de carburant selon la revendication 3, dans lequel le dispositif de serrage comprend deux plaques de serrage (30, 32) et des moyens (34, 38) destinés à rapprocher les plaques l'une vers l'autre depuis des côtés opposés du réservoir.

5. Réservoir de carburant selon la revendication 4, dans lequel les deux parois de réservoir opposées (22, 24) sont soudées ensemble par une soudure annulaire et les moyens destinés à rapprocher les plaques (30, 32) comprennent une tige filetée (34) et un écrou (38) qui peut être vissé sur la tige afin de resserrer les plaques, le boulon passant à travers une ouverture dans les parois du réservoir qui est placée à l'intérieur du périmètre de la soudure annulaire.

6. Réservoir de carburant selon la revendication 4 ou 5, dans lequel les plaques de serrage (30, 32) ont une forme destinée à se conformer à la forme convolutée ou plissée des régions de paroi du réservoir.

7. Réservoir de carburant selon la revendication 6, dans lequel les plaques de serrage (30, 32) du dispositif de serrage exercent des forces de serrage sur les bases des rainures annulaires (31).

8. Réservoir de carburant selon l'une des revendications précédentes, dans lequel les parois opposées (22, 24) sont essentiellement parallèles l'une par rapport à l'autre et sont soudées ensemble avec leurs surfaces de contact en contact l'une avec l'autre.

9. Réservoir de carburant selon l'une des revendications 1 à 6, dans lequel les parois opposées sont soudées ensemble sur une ligne de soudure annulaire (26), la matière englobée par la ligne de soudure annulaire est retirée et les arêtes des parois du réservoir sont soudées ensemble arête-à-arête afin de former une soudure bord-à-bord.
